(19) Europäisches Patentamt

European Patent Office

Office européen des brevets

(11) Publication number: **0 289 154 B1**

# EUROPEAN PATENT SPECIFICATION

(45) Date of publication of patent specification: **13.10.93** (51) Int. Cl.5: **G09B 21/00**

(21) Application number: **88303202.1**

(22) Date of filing: **11.04.88**

(54) Tactile code for the visually impaired and blind.

(30) Priority: **22.04.87 US 41372**

(43) Date of publication of application:
**02.11.88 Bulletin 88/44**

(45) Publication of the grant of the patent:
**13.10.93 Bulletin 93/41**

(84) Designated Contracting States:
**AT BE CH DE ES FR GB IT LI LU NL SE**

(56) References cited:
**NL-A- 7 306 272**
**US-A- 3 363 339**

**COMPUTER SYSTEMS, vol. 5, no. 12, December 1985, page 11, Bramley, GB; "More access for the blind"**

(73) Proprietor: **Chepaitis, Elia V.**
**370 McKinley Avenue**
**New Haven Connecticut 06515(US)**

(72) Inventor: **Chepaitis, Elia V.**
**370 McKinley Avenue**
**New Haven Connecticut 06515(US)**

(74) Representative: **Sorrell, Terence Gordon et al**
**Fitzpatricks**
**4 West Regent Street**
**Glasgow G2 1RS Scotland (GB)**

**Description**

The present invention is directed to the field of tactile codes for the visually impaired and blind, and is more specifically directed to embossed symbols which represent the letters of the alphabet and the Arabic numerals 0-9 which can be traced with the fingertips.

The conventional means for conveying written information to visually impaired or blind persons has long been the braille code. Braille is a tactile code in which each of the letters of the conventional Roman alphabet and each of the conventional arabic numerals is represented by a combination of raised dots peculiar to that letter or numeral. The field in which a single letter or numeral is represented is a matrix of six dots, three dots high by two dots wide. The code for the letters A through J are the same codes as for the numerals 1 through 9 and 0, so an extra code is provided to notify the reader that the code immediately following is to be interpreted as a numeral. A second extra code notifies the reader that the code immediately following is to be read as a capital letter.

The production of braille text thus is labor intensive and difficult, and learning to read braille text requires significant prowess and tactile acuity. Moreover, because the braille code bears little resemblance to the alphabet with which many who experience a loss of vision are familiar, it is particularly inappropriate for those who lose their sight late in life, when the resources and motivation to learn braille may be inadequate.

Modifications and alternatives to braille have been proposed to improve readability. For example, U.S. Patent No. 3,363,339 to Place discloses braille cell structure which uses non-uniform raised dots or embossments in regular braille locations, which enables the reader to identify the cell line or column to which a boss belongs, even when a row or column is blank. U.S. Patent No. 43,197,889 to Micropoulou discloses an alternative tactile code to braille comprising forming the thirteen most frequently used consonants by upsetting from the surface of a sheet, patterns consisting of groups of projections in permutations and combinations of four, the projections being disposed at the corners of a square, while the remaining letters of the alphabet are similarly formed, but by patterns consisting of two groups placed side by side. Numbers are formed by patterns of two such groups, the pattern of the first group of which differs from the pattern of the first group of the two letter groups. However, even these codes bear little resemblance to the conventional Roman alphabet and Arabic numerals, and thus suffer from the same deficiencies as conventional braille.

In summary, no simple tactile code exists which bears resemblance to the conventional alphabet and numerals and is therefore appropriate for use by those without the physical resources or motivation to learn braille. It is the solution of these problems to which the present invention is directed.

SUMMARY OF THE INVENTION

Therefore, it is the primary object of this invention to provide a system of embossed symbols which offers easily learned and readable letters and numbers, building on knowledge and skills which many visually impaired and blind people have already acquired.

It is another object of this invention to provide a system of embossed symbols which resemble the letters of the conventional Roman alphabet and the conventional Arabic numerals.

The foregoing and other objects of the invention are achieved by provision of a tactile code for use by visually impaired and blind persons comprising embossed alphabet symbols representing the letters of the conventional Roman alphabet and embossed numeral symbols representing the conventional Arabic numerals. The alphabet symbols are divided into first, second, third, and fourth groups, the alphabet symbols in the first and third groups being denoted by a circular frame, and the alphabet symbols in the second and fourth groups being surrounded by a square frame. Each alphabet symbol embodies at least a physical association, such as a dominant characteristic, of its corresponding letter of the Roman alphabet. The numeral symbols are all denoted by a diamond frame, and each numeral symbol embodies either a logical or physical association with its corresponding Arabic numeral.

In one aspect of the code of the invention, some of the alphabet symbols comprise the entire corresponding conventional letter enclosed within the frame. In another aspect of the code of the invention, the interior portion or the symbol consists of a portion of the corresponding Roman letter. In still another aspect of the code of the invention, the frame alone or in combination with the interior portion of the symbol reproduces the corresponding capital letter of the Roman alphabet. Capital letters of the Roman alphabet are represented by a symbol having a double frame.

A better understanding of the disclosed embodiment of the invention will be achieved when the accompanying detailed description is considered in conjunction with the appended drawings, in which like reference numerals are used for the same parts as illustrated in the different figures.

## BRIEF DESCRIPTION OF THE DRAWINGS

Figures 1(A)-1(Z) are a table showing the symbols in the tactile code of the invention for the letters A-Z;
Figures 2(1)-2(0) are a table showing the symbols in the tactile code of the invention for the numerals 1-9 and 0;
Figure 3 is a perspective view of symbols of the tactile code of the invention spelling the word "sighted", being read with a fingertip;
Figure 4 is an enlarged plan view of the symbol representing the letter "t";
Figure 5 is a cross-sectional view taken along line 5-5 of Figure 4; and
Figure 6 is an enlarged plan view of the symbols for the letters "A" and "E".

## DESCRIPTION OF THE PREFERRED EMBODIMENT

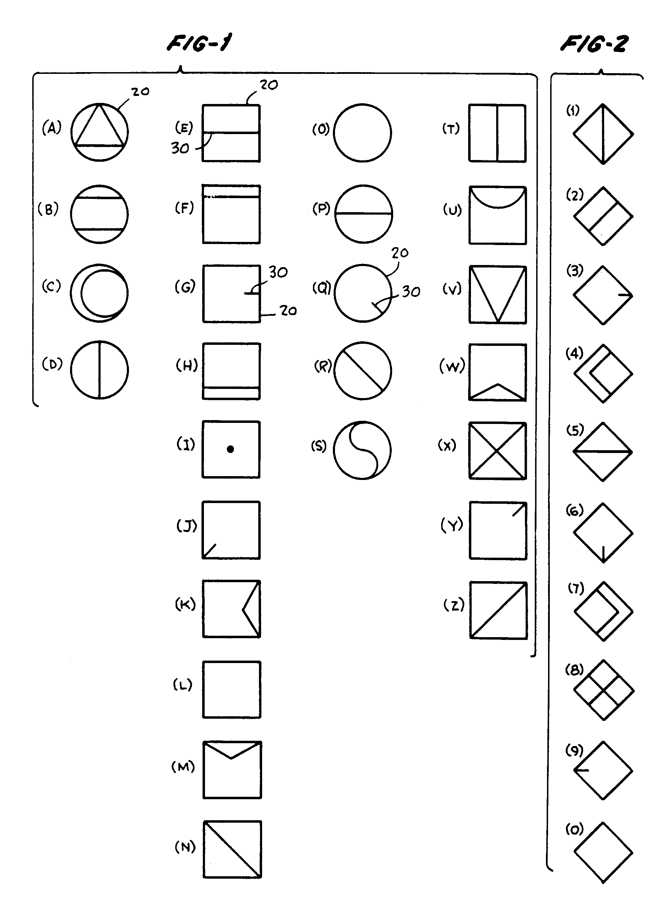

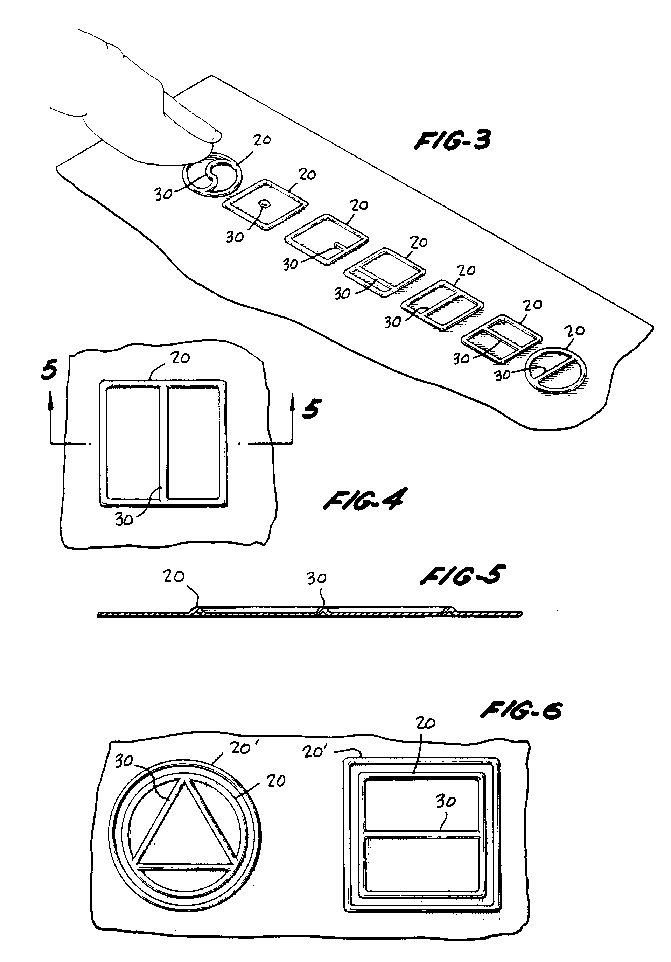

Referring now to Figures 1 and 2, there are shown tables of the tactile code according to my invention. Figures 1(A)-1(Z) are the alphabet symbols representing the letters a-z of the conventional Roman alphabet, while Figures 2(1)-2(0) represent the numerals symbols representing the conventional arabic numerals 1-9 and 0. As shown in Figures 3-6, these symbols are embossed, preferably on a heavy grade of paper. The use of existing embossing techniques is contemplated. If the symbol height is sufficient, the symbols can be traced with the fingertips much more easily than braille dots.

Referring now to Figures 1 and 3-6, all of the alphabet symbols comprise at least a frame 20, and all but two of the alphabet symbols (the symbols corresponding to the Roman letters "l" and "o,") also comprise an interior portion 30 surrounded by the frame 20. The alphabet symbols resemble those of the conventional Roman alphabet in that each of the alphabet symbols embodies at least a physical association with its corresponding letter of the Roman alphabet. Specifically, each alphabet symbol reproduces either the entire letter of the Roman alphabet or one of its dominant characteristics, such a tail, bar, or diagonal. In some symbols (those corresponding to the Roman letter "c", "s", "v", and "x", for example), the interior portion of the symbol reproduces the entire corresponding capital letter of the Roman alphabet. In other symbols (those corresponding to the Roman letters "d", "e", "f", "h", "m", "n", "t", and "w", for example) , the interior portion in combination with at least part of the frame reproduces the entire corresponding capital letter of the Roman alphabet. The alphabet symbols can also use a logical association (for example, the alphabet symbol for the Roman letter "i" resembles an eye).

The alphabet symbols are divided into first, second, third, and fourth groups, shown in Figures 1(A)-1-(D), 1(E)-1 (N), 1(O)-1(S), and 1(T)-1(Z), respectively. These groups correspond to the letters a-d, inclusive, e-n, inclusive, o-s, inclusive, and t-z, inclusive, respectively. The alphabet symbols in the first and third groups have a circular frame and the alphabet symbols in the second and fourth groups have a square frame, so that letters in adjacent groups have differently shaped frames. Thus, when the reader encounters a circle, for example, he or she knows that he or she is dealing with a letter from the first or third group . The frames therefore serve as the primary key to direct the reader to a limited number of candidates, to mace deciphering as swift and as easy as possible. I have reserved the most easily traced symbols for vowels and for frequently used letters. As shown in Figure 6, the capital letters of the Roman alphabet are represented in my code by alphabet symbols having double frames 20 and 20'.

Referring now to Figure 2, all of the numeral symbols also comprise a frame, and all but one of the numeral symbols (the numeral symbol corresponding to the Arabic numeral "0") also comprise an interior portion surrounded by the frame. All of the numeral symbols have a diamond frame, and each of the numeral symbols embodies either a logical or physical association or both with its corresponding Arabic numeral.

An explanation of the physical and logical associations of each of the alphabet and numeral symbols of the tactile code of the invention is given below:

|  | | Physical Association | Logical Association | Explanation |
|---|---|---|---|---|
| Letter: | a | yes | no | dominant characteristic |
| | b | yes | no | dominant characteristic, bar |
| | c | yes | no | fully represented |
| | d | yes | no | fully represented |
| | e | yes | no | fully represented |
| | f | yes | no | dominant characteristic, bar |
| | g | yes | no | dominant characteristic, tail |
| | h | yes | no | dominant characteristic, bar |
| | i | yes | yes | dominant characteristic, "eye" |
| | j | yes | no | dominant characteristic, tail |
| | k | yes | no | dominant characteristic, diagonal |
| | l | yes | no | fully represented |
| | m | yes | no | dominant characteristic, diagonal |

|  | Physical Association | Logical Association | Explanation |
|---|---|---|---|
| n | yes | no | fully represented |
| o | yes | yes | fully represented, inherent in frame, "0!" |
| p | yes | no | dominant characteristic, bar |
| q | yes | no | dominant characteristic, tail |
| r | yes | no | dominant characteristic, diagonal |
| s | yes | no | fully represented |
| t | yes | no | fully represented |
| u | yes | no | fully represented |
| v | yes | no | dominant characteristic, diagonal |
| w | yes | no | dominant characteristic, diagonal |
| x | yes | no | fully represented |
| y | yes | no | dominant characteristic, tail |
| z | yes | no | fully represented |
| Number: 1 | yes | no | fully represented |
| 2 | yes | yes | dominant characteristic, outline, clock position touched |
| 3 | yes | yes | dominant characteristic, outline, clock position touched |
| 4 | yes | yes | dominant characteristic, outline, clock position touched |
| 5 | no | yes | plenitude, half way |
| 6 | no | yes | clock position touched |
| 7 | yes | yes | dominant characteristic, outline, clock position touched |
| 8 | yes | no | dominant characteristic, outline, clock position touched |
| 9 | no | yes | clock position touched |
| 0 | no | yes | plenitude, zero or empty |

Thus it will be seen that the present invention provides a unique tactile code for use by visually impaired and blind persons.

## Claims

1. A tactile code for use by visually impaired and blind persons comprising embossed alphabet symbols representing the letters of the conventional Roman alphabet, characterised in that:

   each one of said alphabet symbols comprises at least one embossed frame (20) surrounding it, and at least some of said alphabet symbols also comprise an interior embossed portion (30) surrounded by said frame (20);

   said alphabet being divided into at least two groups of symbols, said alphabet symbols in adjacent groups of symbols having frames of different shapes, and each said alphabet symbol embodying at least a physical association with its corresponding letter of the Roman alphabet.

5

**2.** The tactile code of claim 1, characterised in that the code further comprises embossed numeral symbols representing the conventional Arabic numerals:

each of said numeral symbols comprising at least one embossed frame (20) surrounding it and said numerial symbols also comprising an interior embossed portion (30) surrounded by said frame (20);

said numeral symbol frame (20) being of a different shape from those of said alphabet symbol frames (20);

and each of said numeral symbols embodying at least a logical or physical association with its corresponding Arabic numeral.

**3.** The tactile code of claim 2, characterised in that said alphabet is divided into first, second, third and fourth groups of symbols, said alphabet symbols in said first and third group of symbols having a circular frame (20) and said alphabet symbol in said second and fourth groups of symbols having a square frame (20), each of said alphabet symbols embodying at least a physical association with its corresponding capital letter of the Roman alphabet;

said numeral symbols all having a diamond frame (20).

**4.** The tactile code of claim 3, characterised in that said first group of symbols consist of the Roman letters a-d, inclusive, said second group of symbols consist of the Roman letters e-n inclusive, said third group of symbols consist of the Roman letters o-s, inclusive, and said forth group of symbols consist of the Roman letters t-z, inclusive.

**5.** The tactile code of any preceding claim, characterised in that capital letters of the Roman alphabet are represented by said alphabet symbols having double frames (20,20').

**6.** The tactile code of any preceding claim, characterised in that said interior embossed portion (30) of at least one of said alphabet symbols reproduces a dominant characteristic of the corresponding letter of the Roman alphabet.

**7.** The tactile code of any preceding claim, characterised in that said interior embossed portion (30) of at least one of said alphabet symbols reproduces the entire corresponding letter of the Roman alphabet.

**8.** The tactile code of any preceding claim, characterised in that said interior embossed portion (30 in combination with at least a part of said frame (20) of at least one of said alphabet symbols reproduces the entire corresponding letter of the Roman alphabet.

**9.** The tactile code of claim 1, characterised in that said at least two groups of symbols have frames (20) which are circles and squares.

**10.** The tactile code of claim 2, characterised in that said numeral symbols have diamond frames (20).

**Patentansprüche**

**1.** Ein tastbarer Code zur Benutzung durch sehbehinderte und blinde Personen mit erhabenen Alphabet-Symbolen, welche die Buchstaben des üblichen lateinischen Alphabets darstellen, dadurch gekennzeichnet,

dass zu jedem der Alphabet-Symbole wenigstens ein erhabener Rahmen (20) gehört, der es umgibt, und dass wenigstens einige der alphabetischen Symbole darüberhinaus einen im Innern liegenden erhabenen Teil (13) haben, der von dem Rahmen (20) umgeben ist;

dass das Alphabet in wenigstens zwei Gruppen von Symbolen unterteilt ist, wobei die in benachbarten Gruppen von Symbolen befindlichen Alphabet-Symbole unterschiedlich gestaltete Rahmen haben und jedes Alphabet-Symbol wenigstens eine körperliche Anlehnung an sein zugehöriges Buchstabenzeichen aus dem lateinische Alphabet verkörpert.

**2.** Tastbarer Code nach Anspruch 1, dadurch gekennzeichnet, dass der Code ferner erhabene Zahlen-Symbole enthält, welche die üblichen Arabischen Zahlen darstellen, wobei

jedes der Zahlen-Symbole wenigstens einen erhabenen Rahmen (20) enthält, der es umgibt, und die Zahlen-Symbole darüberhinaus einen innenliegenden erhabenen Teil (30) beinhalten, der von dem

6

Rahmen (20) umgeben ist;

der Rahmen (20) des Zahlen-Symbols eine Gestalt hat, die von den Gestalten der Rahmen (20) der Alphabet-Symbole verschieden ist;

und wobei jedes der Zahlen-Symbole wenigstens eine logische oder körperliche Anlehnung an seine zugehörige arabische Ziffer verkörpert.

3. Tastbarer Code nach Anspruch 2, dadurch gekennzeichnet, dass das Alphabet in eine erste, zweite dritte und vierte Gruppe von Symbolen unterteilt ist, wobei die Alphabet-Symbole in der ersten und dritten Gruppe von Symbolen einen kreisförmigen Rahmen (20) und die Alphabet-Symbole in der zweiten und vierten Gruppe von Symbolen einen quadratischen Rahmen (20) haben und jedes der Alphabet-Symbole wenigstens eine körperliche Anlehnung an seinen zugehörigen Großbuchstaben des lateinischen Alphabetes verkörpert;

dabei haben alle Zahlensymbole einen rautenförmigen Rahmen (20).

4. Tastbarer Code nach Anspruch 3, dadurch gekennzeichnet, dass die erste Gruppe von Symbolen aus den lateinischen Buchstaben a - d einschließlich, die zweite Gruppe von Symbolen aus den lateinischen Buchstaben e - n einschließlich, die dritte Gruppe von Symbolen aus den lateinischen Buchstaben o - s einschließlich und die vierte Gruppe von Symbolen aus den lateinischen Buchstaben t - z einschließlich besteht.

5. Tastbarer Code nach einem der vorstehenden Ansprüche, dadurch gekennzeichnet, dass die großen Buchstaben des lateinischen Alphabetes durch die Alphabet-Symbole mit doppelten Rahmen (20, 20') dargestellt werden.

6. Tastbarer Code nach einem der vorstehenden Ansprüche, dadurch gekennzeichnet, dass der innenliegende erhabene Teil (30) von wenigstens einem der Alphabet-Symbole ein beherrschendes Merkmal des entsprechenden Buchstabenzeichens aus dem lateinischen Alphabet wiedergibt.

7. Tastbarer Code nach einem der vorstehenden Ansprüche, dadurch gekennzeichnet, dass der innenliegende erhabene Teil (30) von wenigstens einem der Alphabet-Symbole das entsprechende Buchstabenzeichen aus dem lateinischen Alphabet vollständig wiedergibt.

8. Tastbarer Code nach einem der vorstehenden Ansprüche, dadurch gekennzeichnet, dass der innenliegende erhabene Teil (30) in Verbindung mit wenigstens einem Teil des Rahmens (20) bei wenigstens einem der Alphabet-Symbole das entsprechende Buchstabenzeichen des lateinischen Alphabets vollständig wiedergibt.

9. Tastbarer Code nach Anspruch 1, dadurch gekennzeichnet, dass wenigstens zwei Gruppen von Symbolen als Rahmen (20) Kreise bzw. Quadrate haben.

10. Tastbarer Code nach Anspruch 2, dadurch gekennzeichnet, dass die Zahlen-Symbole rautenförmige Rahmen (20) haben.

**Revendications**

1. Code tactile destiné à être utilisé par des personnes aveugles ou malvoyantes comportant des symboles alphabétiques en relief représentant les lettres de l'alphabet latin conventionnel, caractérisé en ce que :

chacun desdits symboles d'alphabet comporte au moins un cadre en relief (20) qui l'entoure, et au moins certains desdits symboles d'alphabet comportent également une partie en relief intérieure (30) entourée par ledit cadre (20);

ledit alphabet étant divisé au moins en deux groupes de symboles, lesdits symboles d'alphabet dans des groupes adjacents de symboles ayant des cadres de formes différentes, et chaque symbole d'alphabet réalisant une association physique avec sa lettre correspondante de l'alphabet latin.

2. Code tactile selon la revendication 1, caractérisé en ce que le code comporte en outre des symboles numériques en relief représentant les chiffres arabes conventionnels :

chacun desdits symboles numériques comportant au moins un cadre en relief (20) qui l'entoure et

EP 0 289 154 B1

lesdits symboles numériques comportant également une partie en relief intérieure (30) entourée par ledit cadre (20);

ledit cadre de symbole numérique (20) étant d'une forme différente de celles desdits cadre de symbole d'alphabet (20);

et chacun desdits symboles numériques réalisant au moins une association physique ou logique avec son chiffre arabe correspondant.

**3.** Code tactile selon la revendication 2, caractérisé en ce que ledit alphabet est divisé en premier, deuxième, troisième et quatrième groupes de symboles, lesdits symboles d'alphabet dans lesdits premier et troisième groupes de symboles ayant un cadre circulaire (20) et ledit symbole d'alphabet dans lesdits deuxième et quatrième groupes de symboles ayant un cadre carré (20), chacun desdits symboles d'alphabet réalisant au moins une association physique avec sa lettre en majuscule correspondante de l'alphabet latin;

lesdits symboles numériques ayant tous un cadre en losange (20).

**4.** Code tactile selon la revendication 3, caractérisé en ce que ledit premier groupe de symboles se compose des lettres latines a à d incluse, ledit deuxième groupe de symboles se compose des lettres latines e à n incluse, ledit troisième groupe de symboles se compose des lettres latines o à s incluse, et ledit quatrième groupe de symboles se compose des lettres latines t à z incluse.

**5.** Code tactile selon l'une quelconque des revendications précédentes, caractérisé en ce que les lettres majuscules de l'alphabet latin sont représentées par lesdits symboles d'alphabet ayant des cadres doubles (20, 20').

**6.** Code tactile selon l'une quelconque des revendications précédentes, caractérisé en ce que ladite partie en relief intérieure (30) d'au moins un desdits symboles d'alphabet reproduit une caractéristique dominante de la lettre correspondante de l'alphabet latin.

**7.** Code tactile selon l'une quelconque des revendications précédentes, caractérisé en ce que ladite partie en relief intérieure (30) d'au moins un desdits symboles d'alphabet reproduit la lettre correspondante entière de l'alphabet latin.

**8.** Code tactile selon l'une quelconque des revendications précédentes, caractérisé en ce que ladite partie en relief intérieure (30) en combinaison avec au moins une partie dudit cadre (20) d'au moins un desdits symboles d'alphabet reproduit la lettre correspondante entière de l'alphabet latin.

**9.** Code tactile selon la revendication 1, caractérisé en ce qu'au moins deux groupes de symboles ont des cadres (20) qui sont des cercles et des carrés.

**10.** Code tactile selon la revendication 2, caractérisé en ce que lesdits symboles numériques ont des cadres en losange (20).

FIG-1

FIG-2

FIG-3

FIG-4

FIG-5

FIG-6